# EUROPEAN PATENT APPLICATION

(11) **EP 2 073 329 A2**
(43) Date of publication of application: **24.06.2009**
(21) Application number: 08169107.3
(22) Date of filing: 14.11.2008
(51) Int. Cl.: H02B 1/50

(54) **Easy to close power unit with hinge**

(30) Priority: 20.12.2007 IT PD20070421
(71) Applicant: Fanton S.p.A., 35026 Conselve (Padova) (IT)
(72) Inventor: Grandi, Orio, 35026, Conselve (PD) (IT)
(74) Representative: Vinci, Marcello

(57) **Abstract**

The invention is a new power unit comprising a main body (C) and at least one overlying cover (A), provided with one or more hinge elements (B) for connecting said cover (A) to said main body (C), and wherein said hinge element (B) is hinged on one side and on the other is made integral with said main body (C) and said cover (A) via removable fixing elements.

## Description

The present patent relates to the sector of components of electrical systems for civil and industrial use, and in particular it concerns a new power unit.

Power units to be used outdoors are known, substantially comprising a casing or main body, substantially parallelepiped in shape, and a cover positioned on said main body.

Said main body is provided with an opening on its upper side, while said cover, substantially parallelepiped in shape, is provided with an opening on its lower side, coinciding with the opening present on the upper side of said main body, and one seat for housing the electric connector.

Screws are generally used to fix said cover to said main body.

Unfortunately, this type of power unit poses the drawback that during assembly and intervention the cover is completely detached from the main body. In this way the operator has both hands busy and therefore cannot carry out other operations; he/she must put the cover somewhere, running the risk of the cover being exchanged, damaged, dirtied or lost.

To remedy all the above-mentioned drawbacks, a new type of power unit with hinge, easy to open and to close, has been designed and constructed.

The new, easy to open and to close power unit with hinge comprises, in its main parts, a main body, a cover positioned over said main body, and one or more connection elements or hinge elements suited to connect said main body to said cover.

Said main body, substantially parallelepiped in shape, comprises at least one generically rectangular opening, located on the upper side of said main body, and one or more seats, located on one of the external edges of said upper side of said main body, said seats being suited to house said hinge elements.

Said seats provided in said main body are suited to house the hinge element and are also provided with one or more holes or housings, substantially cylindrical in shape, suited to house the rotation fulcra of said hinge element. The central axes of said fulcra substantially coincide with each other and are parallel to said external edge of said upper side of said main body.

Said cover, substantially parallelepiped in shape, comprises at least one opening, on its lower side, which coincides with said upper opening of said main body, and one or more seats for housing an electric connector.

Said cover is connected to said main body through said hinge elements, suited to be placed in said seats in said main body, so that each hinge element is preferably hinged to said main body on one side and fixed to said cover with screws on the other side.

Said hinge element, substantially parallelepiped in shape, is provided with one or more holes, preferably obtained on the upper surface of said hinge element, for connecting said hinge element with said cover via fixing elements like screws.

The new, easy to close power unit with hinge, secured to four or more screws, also has the great advantage of allowing complete access to the main body.

These and other direct and complementary objects are achieved by the new, easy to open and close power unit with hinge.

Power unit with main body and overlying cover, comprising one or more moving hinge elements hinged to said main body and fixed to said cover via a removable fixing element.

According to an equivalent solution, said hinge element is hinged to said cover and fixed to said main body.

The characteristics of the new, easy to open and close power unit with hinge will be highlighted in greater detail in the following description, with reference to the drawings attached as non-limiting examples.

The attached drawings show, as a non-limiting example, a practical embodiment of the new, easy to open and close power unit with hinge.

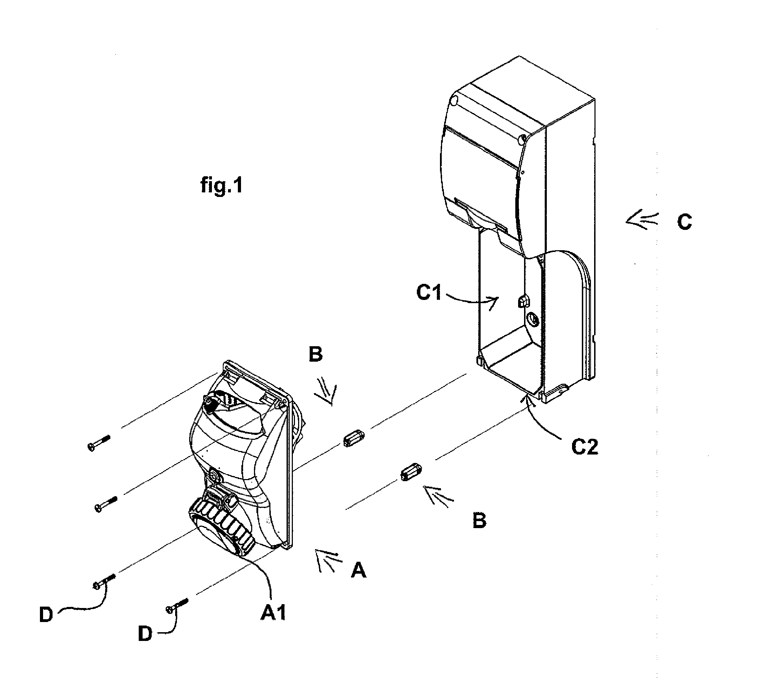

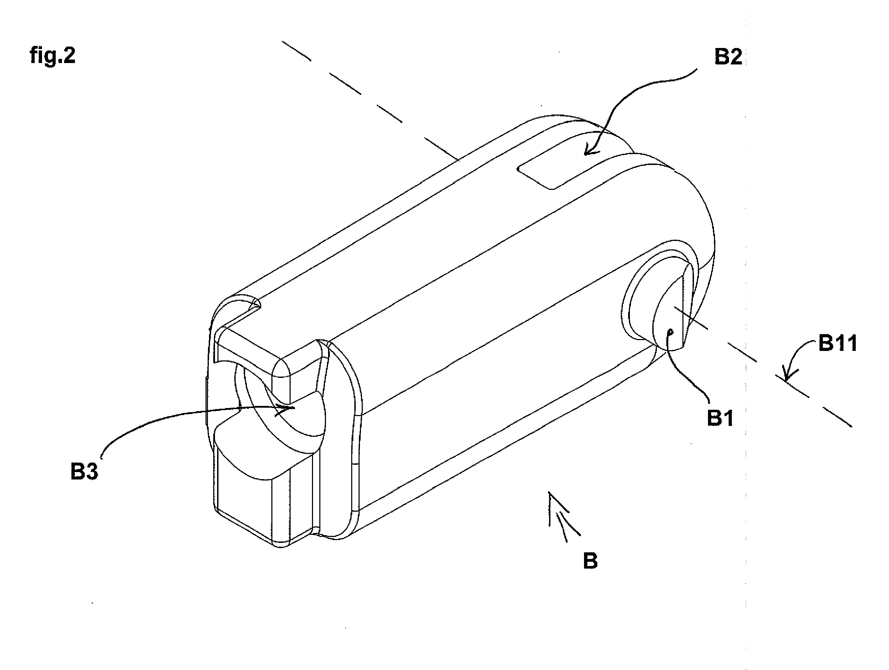

Figure 1 shows an exploded view of the new power unit, while Figure 2 shows a detail of the hinge element of the new power unit.

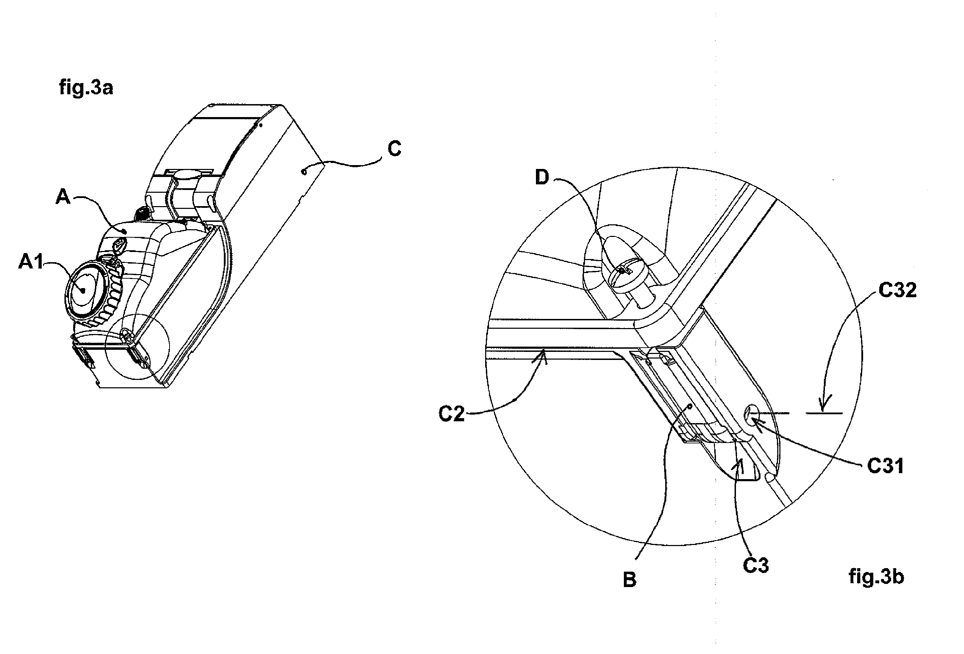

Figure 3a shows the new power unit with closed cover, while Figure 3b shows a detail of the hinge element housed in the seat provided in the new power unit.

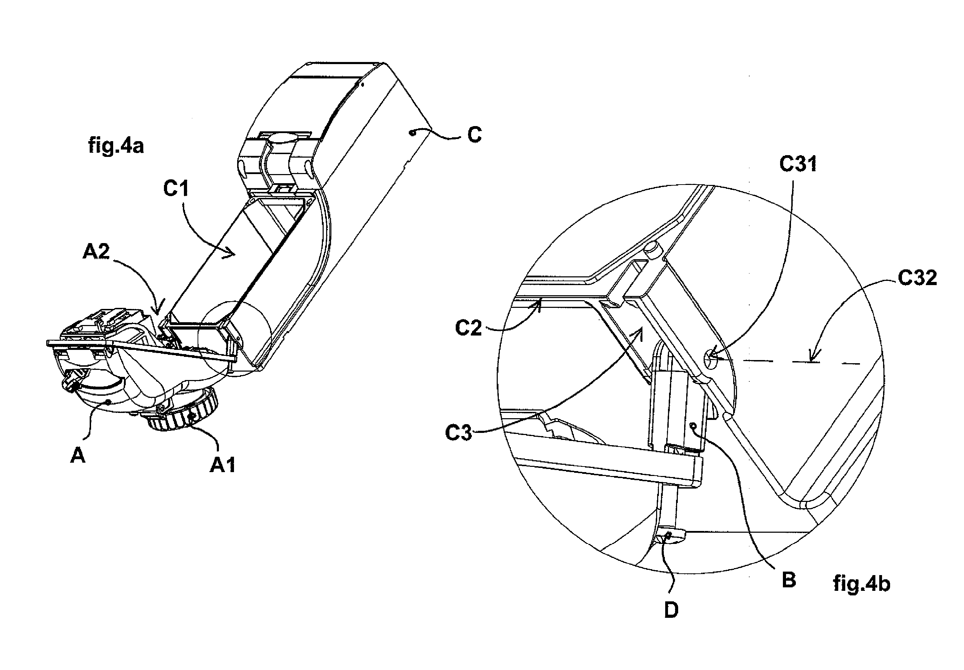

Figure 4a shows the new power unit with open cover, while Figure 4b shows a detail of the hinge element of the new power unit during the rotation and opening stage.

The new, easy to open and to close power unit with hinge comprises, in its main parts, a main body (C), a cover (A) positioned over said main body (C), and one or more hinge elements (B) suited to connect said cover (A) to said main body (C).

Said cover (A), substantially parallelepiped in shape, comprises a generically rectangular opening (A2) located on the lower side of said cover (A), and one seat (A1) located on its upper side, suited to house the electric connector, if present.

Said main body (C), substantially parallelepiped in shape, comprises at least one opening (C1), on its upper side, which coincides with said lower opening (A2) of said cover (A), and one or more seats (C3) located on one of the external edges (C2) of said upper side of said main body (C).

Said main body (C) and said cover (A) are connected to each other through the hinge elements (B), which in the preferred embodiment of the invention are two, located in said seats (C3) of said main body (C), so that said hinge element (B) is hinged to said main body (C) on one side and fixed to said cover (A) with screws (D) on the other side.

Said seats (C3) of said substantially parallelepiped main body (C) comprise one or more holes or housings (C31), substantially cylindrical in shape, located on the lower part of the inner lateral wall of said seats (C3) of said main body (C). Furthermore, the central axes (C32) of said cylindrical housings (C31) substantially coincide with each other and are parallel to said edge (C2) of said upper side of said main body (C).

Said hinge element (B), substantially parallelepiped in shape, is provided on its lower part with one ore more external side projections (B1), substantially cylindrical, suited to be inserted in said housings (C31), and with one vertical notch (B2), suited to make the lower part of said hinge element (B) elastic, thus allowing said side projections (B1) to be inserted in the respective housings (C31) of said main body (C).

Furthermore, said hinge element (B) is provided with one or more threaded holes (B3), made in the upper surface of said hinge element (B); for connecting said cover (A) to said hinge element (B) via screws (D).

Furthermore, according to the invention said seats (C3) of the main body (C) comprise on their upper part a shoulder on which the upper surface of said hinge element (B) rests during screwing, in such a way as to prevent said hinge element (B) from translating while the screws (D) are being screwed in. In this way no strain is exerted on said lateral projections (B1) of the hinge element (B), which otherwise may be broken or damaged.

In the preferred embodiment of the invention, said screws (D) have a thread whose diameter is larger than that of the hole present in said cover (A), so that they cannot come off.

Said projections (B1), perpendicular to said vertical notch (B2) of said hinge element (B), are suited to be inserted in said cylindrical housings (C31) of said seat (C3) of said main body (C), in such a way as to allow said hinge elements (B) to rotate around the central axis (B11) of said projections (B1).

Therefore, with reference to the above description and the attached drawings, the following claims are expressed.

## Claims

1. Power unit comprising a main body (C) and at least one overlying cover (A), **characterized in that** it comprises one or more hinge elements (B) for connecting said cover (A) to said main body (C), and wherein said hinge element (B) is hinged on one side and on the other is made integral with said main body (C) and said cover (A) via removable fixing means.

2. Power unit according to claim 1, **characterized in that** each one of said hinge elements (B) is hinged to said main body (C), and wherein said cover (A) is fixed to said hinge element (B) via a removable fixing element (D).

3. Power unit according to claim 1, **characterized in that** said removable fixing element (D) is constituted by one or more screws.

4. Power unit according to claims 1 and 2, **characterized in that** said main body (C) comprises one or more seats (C3) for housing said hinge elements (B).

5. Power unit according to claims 1, 2 and 3, **characterized in that** said hinge elements (B) have coinciding rotation axis (B11).

6. Power unit according to claims 1, 2, 3 and 4, **characterized in that** said seats (C3) comprise at least one shoulder, located on the upper surface of said seat (C3), on which said hinge element (B) rests.
